# EUROPEAN PATENT SPECIFICATION

(11) **EP 1 857 372 B1**
(45) Date of publication and mention of the grant of the patent: **23.03.2011**
(21) Application number: 06113934.1
(22) Date of filing: 15.05.2006
(51) Int. Cl.: B65D 39/00, B60K 15/04

(54) **Fluid charging arrangement**
Flüssigkeitsladevorrichtung
Dispositif de charge de fluide

(43) Date of publication of application: 21.11.2007
(73) Proprietor: Ford Global Technologies, LLC, Dearborn, MI 48126 (US)
(72) Inventor: Backlund, Sune, 517 92 Bollebygd (SE)
(74) Representative: VALEA AB

(56) References cited:
- WO-A-98/34833
- GB-A- 2 254 317
- US-A- 5 258 191
- US-A- 5 322 100

## Description

### TECHNICAL FIELD

The present invention relates to motor vehicle fluid charging arrangements. The fluid charging arrangement comprises a charging connection having a first portion and a splash guard. The splash guard is adapted to be located in said first portion of said charging connection.

### BACKGROUND OF THE INVENTION

A vehicle generally comprises separate reservoirs for a plurality of fluids including, but not limited to: windscreen washer fluid; coolant; and oil. Each of the aforementioned fluids is charged via a dedicated charging connection, which often has a filler opening in the vicinity of a vehicle engine. The opening is generally sealed by a filler cap whenever fluid is not being charged in order to reduce the risk of fluid pollution and in order to avoid that the fluid will splash out of the filler opening while the engine is running.

If a user, after completing charging a fluid, forgets to put on the filler cap prior to starting the vehicle engine, there is a substantial risk that fluid will splash out of the filler opening and possibly onto the vehicle engine, or any other part of the vehicle, due to motions of the vehicle and a subsequent disturbance of the fluid. Depending on the type of fluid splashed onto e.g. the vehicle engine and the temperature of the vehicle engine, several problems may occur. For instance, if the engine is hot and the fluid is oil, there is a risk of smoke generation, which may result in a forced stop of the vehicle engine.

WO 98/34833 A discloses a filler neck closure assembly including a housing formed to include a passage, a tank pressure control assembly in passage and an outer shell coupled to housing. The closure assembly includes a sleeve that reinforces housing and shields tank pressure control assembly. The closure assembly also includes a sealing gasket and a foam ring between housing and a side wall of outer shell to prevent leakage of fuel vapor therebetween.

GB-A-2 254 317 discloses a filler cap for a liquid reservoir tank, for example, a brake master cylinder. The filler cap has a deflector assembly for covering an inlet of the reservoir tank and a diaphragm located between the deflector assembly and the cap. An inner cap covers air passage to prevent fluid leakage. Air passages in combination with the deflector assembly and a slit valve in the diaphragm maintains atmospheric pressure within the reservoir tank.

US-A-5 322 100 discloses a fuel filler module which fits in the filler pipe of an automotive fuel tank and includes a spring biased trap door that cooperates with a fuel nozzle restrictor to seal an open end of the filler pipe automatically when a fuel nozzle is withdrawn. The fuel filler module also includes a fuel nozzle guide that is part of a vent system for venting the fuel tank during the refuelling process and a splash guard feature that prevents splash back at the end of the refuelling process.

US-A- 5 258 191 discloses a press-on, pry-off closures having movable insert disks in an outer shell.

US-A-2 940 677 discloses a waste disposal device comprising an outer housing with an upper portion and a lower portion.

In order to prevent a fluid from splashing out of the fluid filler opening, a splash guard is inserted in the charging connection. A splash guard can be formed in one of a plurality of different shapes, as long as the splash guard allows the reservoir to be filled with fluid through the filler opening, but prevents the fluid from splashing out of the reservoir through the same. Previous known art teaches the use of splash guards made out of a metallic material, welded in the charging connection. However, metallic splash guards may be expensive and cumbersome to manufacture. Furthermore, attaching the splash guard in the charging connection by welding is a time consuming operation which increases the lead time for manufacturing the vehicle.

### SUMMARY OF THE INVENTION

A first object of the invention is to provide a splash guard which is easily mounted into a charging connection.

This first object is achieved by a motor vehicle as claimed in appended claim 1.

Thus, the invention relates to a motor vehicle comprising a fluid charging arrangement for a fluid reservoir in the motor vehicle. The fluid charging arrangement comprises a charging connection. The charging connection has a first portion and the arrangement further comprises a splash guard. The splash guard is adapted to be located in the first portion of the charging connection. According to the invention, the splash guard is adapted to be attached to the first portion by a snap-on connection.

As used herein, the expression "snap-on connection" refers to a connection between a plurality of connecting parts, wherein at least one of the parts is adapted to snap into position and fit to another part. Generally, at least a portion of one connecting part is adapted to deform during a mounting procedure. When a desired relative position between a plurality of connecting parts is obtained, the portion, at least partially, abandons its deformed state, resulting in that first abutment means, arranged in connection with the first portion, engages with abutment means on the other connecting part. In a snap-on connection, either of the plurality of connecting parts can be equipped with a portion adapted to deform during a mounting procedure. In reality, a snap-on connection can be provided in which several connecting parts each have a portion adapted to be deformed during a mounting phase.

As previously stated, a splash guard is a device which can be formed in one of a plurality of different shapes, as long as the splash guard allows the reservoir to be filled with fluid through the filler opening but prevents the fluid from splashing out of the reservoir through the filler opening.

Using the fluid charging system in a pursuant to the invention simplifies the mounting of a splash guard and also simplifies a possible future replacement of a defective splash guard, as compared to prior art solutions in which metal splash guards are welded in the charging connection. Furthermore, mounting of the splash guard can preferably be performed without a need for time consuming attachment operations, such as welding or gluing.

According to an embodiment of the invention, the snap-on connection comprises a first abutment member on the splash guard and a second abutment member in the first portion of the charging connection, wherein at least one of the abutment members is adapted to undergo elastic deformation during mounting of the splash guard.

Thus, the splash guard is operable to be mounted in the first portion of the charging connection by simply introducing the splash guard into the charging connection, during which introduction at least one of the abutment members is elastically deformed, until the first and second abutment members engage. Consequently, an installation engineer or robot does not have to explicitly move the abutment members during the mounting procedure, which is advantageous from a mounting procedural point of view.

According to another embodiment of the invention, the snap-on connection comprises an elastically deformable protrusion on the splash guard and a groove in the first portion of the charging connection, wherein the protrusion is adapted to engage with the groove. This is a preferred embodiment of the invention, since a groove is generally easily manufactured in a first part of a charging connection, by means of groove milling or similar.

According to a further embodiment of the invention, the elastically deformable protrusion comprises an elastically deformable hook attached to the splash guard. The hook comprises a proximal end adapted to elastically deform and a distal end adapted to engage with the groove. Adopting this implementation, an elastically deformable protrusion is obtained which takes up little room and which is easily manufactured.

According to a further embodiment of the invention, the elastically deformable hook and the splash guard are a unitary component. This simplifies the manufacturing of the splash guard and elastically deformable hook assembly, especially if the assembly is die cast.

According to a further embodiment of the invention, the elastically deformable protrusion comprises a plurality of hooks. Using a plurality of hooks provides a reliable attachment of the splash guard as well as increasing the possibility of obtaining the splash guard at a desired orientation with respect to the charging connection.

According to a further embodiment of the invention, the groove extends circumferentially around an inner wall of the first portion. This further simplifies the mounting of the splash guard in the charging connection, since the splash guard does not necessarily have to be rotated in the direction of introduction during mounting in order to obtain a snap-on engagement. Since the groove according to this embodiment of the invention extends circumferentially, the splash guard can generally assume any rotation around the direction of introduction and still engage with the groove.

A second object of the invention is to provide a splash guard which is simple to manufacture and which has a low weight.

This second object of the invention is achieved by a motor vehicle in the attached claim 8.

Thus, the invention further relates to a motor vehicle wherein the splash guard is made of a plastics material, for example a polyamide such as polyamide 66. Manufacturing the splash guard of a plastics material results in a plurality of advantages including, but are not limited to, that: the splash guard is susceptible to being manufactured in a time and cost efficient manner; there is a potential weight reduction when utilizing a splash guard of a plastics material instead of one of e.g. metal; and a splash guard of a plastics material is generally less exposed to corrosion.

According to an embodiment of the invention, the splash guard is die cast. Die casting the splash guard provides the possibility of manufacturing a splash guard of any shape.

According to further embodiment of the invention, the first portion of the charging connection extends in a first direction and the splash guard comprises a at least one opening, wherein the at least one opening is delimited by an inclined surface with respect to the first direction. Thus, a splash guard is provided which reduces the risk of having fluid splashing out of the charging connection during operation of the vehicle while still providing a passage for fluid replenishment.

According to another embodiment of the invention, the splash guard comprises a plurality of mutually spaced apart ribs, at least one of the ribs being inclined with respect to the first direction. Preferably, the mutually spaced apart ribs are orientated parallel to one another. Furthermore, the mutually spaced ribs are in one embodiment of the invention preferably equally inclined with respect to the first direction.

In order to efficiently prevent fluid from splashing out of the charging device, the inclination of the ribs with respect to the first direction is, in one embodiment of the invention, preferably in a range of 10-80°, more preferably in a range of 30-60°. According to further embodiment of the invention, the ribs collectively present a projected area in the first direction which is greater than 50 %, preferably greater than 80 %, of the total area of the splash guard in the first direction. Naturally, the greater the projected area of the ribs, the better the assembly according to the invention can prevent fluid from splashing out of the charging connection of the assembly.

### BRIEF DESCRIPTION OF THE DRAWINGS

The present invention will hereinafter be explained by means of non-limiting examples with reference to the appended figures, wherein:
- Fig. 1: is a cross-sectional view of a fluid reservoir with a fluid charging arrangement of the invention;
- Fig. 2: is a detailed view of an implementation of the snap-on connection, which is a part of the present invention;
- Fig. 3: is a detailed view of an alternative implementation of the snap-on connection;
- Fig. 4: is a detailed view of a preferred implementation of the snap-on connection;
- Fig. 5a: is a cross-sectional view of an embodiment of the invention during a mounting phase;
- Fig. 5b: is a cross-sectional view of the embodiment illustrated in Fig. 5a in an installed position;
- Fig. 6a: is a cross-sectional view of another embodiment of the invention during a mounting phase;
- Fig. 6b: is a cross-sectional view of the embodiment illustrated in Fig. 6a in an installed position;
- Fig. 7: is a cross-sectional view of further embodiment of the invention during a mounting phase;
- Fig. 8: is a perspective view of a preferred implementation of a splash guard, which is a part of the present invention;
- Fig. 9: is a perspective view of a charging connection, adapted to receive the splash guard illustrated in Fig. 8;
- Fig. 10: is cross-sectional view of an embodiment of the invention with an implementation of the splash guard;
- Fig. 11: is cross-sectional view of an embodiment of the invention with another implementation of the splash guard;
- Fig. 12: is cross-sectional view of an embodiment of the invention with further implementation of the splash guard;
- Fig. 13: is cross-sectional view of the embodiment of the invention illustrated in Fig. 12, wherein the splash protection feature of the splash guard is illustrated; and
- Fig. 14: is cross-sectional view of an embodiment of the invention.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims.

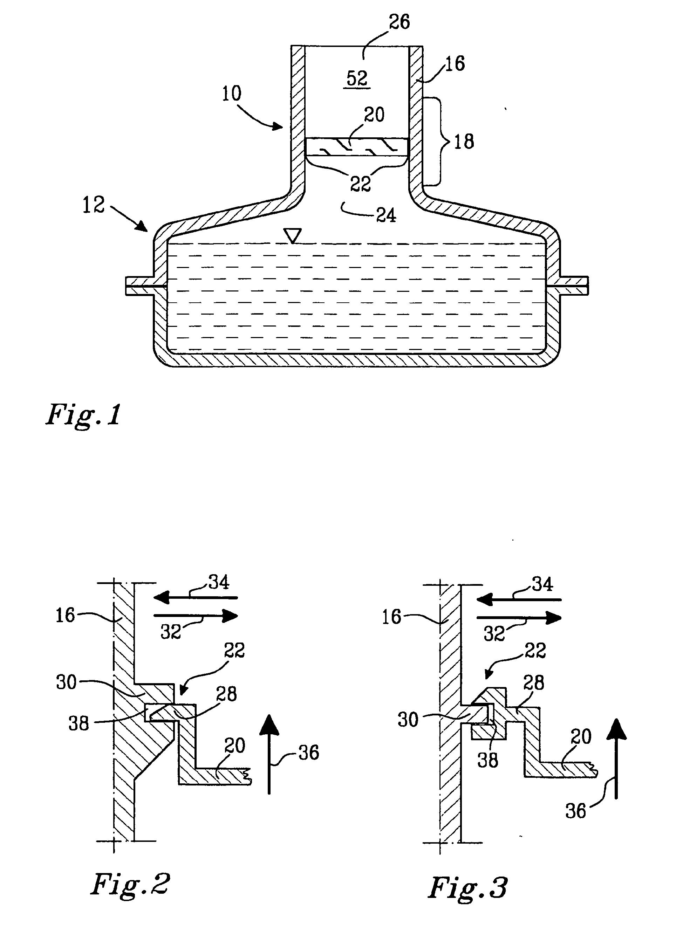

Fig. 1 illustrates a general fluid charging arrangement 10 for a fluid reservoir 12 in a motor vehicle 14. As previously indicated, the fluid reservoir 12 can be adapted to receive one of a plurality of fluids intended to be used in a motor vehicle, such as: oil; windscreen washer fluid; or coolant. The fluid charging arrangement 10 comprises a charging connection 16 having a first portion 18. As illustrated in Fig. 1, the arrangement 10 further comprises a splash guard 20 adapted to be located in the first portion 18 of the charging connection 16. The splash guard 20 is adapted to be attached to the first portion 18 by a snap-on connection 22. In Fig. 1, the splash guard 20 is adapted to be mounted by introducing the splash guard 20 in the charging connection 16 from a lower opening 24 which is separate from the fluid filler opening 26 of the charging connection 16. However, in other applications of the invention, it may be preferred to introduce the splash guard 20 via the fluid filler opening 26 of the charging connection 16.

In all the embodiments illustrated in the drawings, the splash guard 20 is preferably made of a plastics material, such as a polymer. Preferably, a polyamide is used, for example polyamide 66. Furthermore, the splash guard 20 is preferably die cast.

Fig. 2 illustrates a snap-on connection 22 according to one embodiment of the invention. As indicated in Fig. 2, the snap-on connection 22 comprises a first abutment member 28 on the splash guard 20 and a second abutment member 30 in the first portion 18 of the charging connection 16. At least one of the abutment members 28, 30 is adapted to undergo elastic deformation during mounting of the splash guard 20. According to the embodiment illustrated in Fig. 2, the first abutment member 28 is adapted to be elastically deformed in a first direction, indicated by arrow 32 and to rebound towards its initial position by moving in a second direction, indicated by arrow 34. Thus, during mounting of the splash guard 20 by moving the same in a mounting direction 36, the first abutment member 28 is elastically deformed in the first direction 32 in order to pass the lower portion of the second abutment member 30. When the first abutment member 28 is level with a recess 38 of the second abutment member 30, the first abutment member 28 is moved in the second direction 34. Thus, the first abutment member 28 will be lead into the recess 38 and the first and second abutment members 28, 30 will engage with each other.

However, as illustrated in Fig. 3, the recess 38 can in some embodiments be located in the first abutment member 28 and the second abutment member 30 can comprise a protrusion.

Furthermore, in some applications, it is preferred to deform the second abutment member 30 instead of the first abutment member 28, in the first and second directions 32 and 34, respectively. Thus, when the splash guard 20 is introduced in the mounting direction 36, the second abutment member is deformed in the second direction 34, allowing the first abutment member 28 to pass the lower portion of the second abutment member 30. When the first abutment member 28 is on level with the recess 38, the second abutment member 30 is moved in the first direction 32, forming an engagement of the first and second abutment members 28, 30.

Preferably, at least one of the abutment members 28, 30 in the Fig. 2 embodiment is resilient. Thus, movement of either the first or second abutment member 28, 30 is obtained by elastically deformable the selected abutment member.

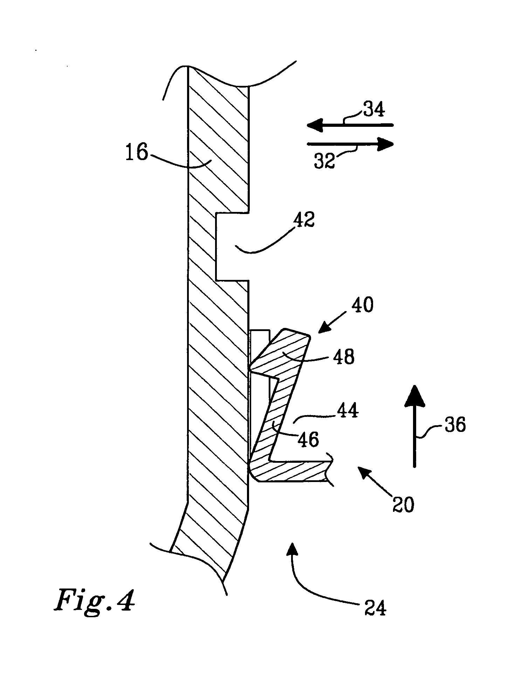

As illustrated in Fig. 4, the snap-on connection 22, in a preferred embodiment of the invention, comprises an elastically deformable protrusion 40 on the splash guard 20 and a groove 42 in the first portion 18 of the charging connection 16. The protrusion 40 is adapted to engage with the groove 42.

The elastically deformable protrusion 40, according to Fig. 4, comprises an elastically deformable hook 44 attached to the splash guard 20. The hook 44 comprises a proximal end 46 adapted to undergo elastic deformation and a distal end 48 adapted to engage with the aforementioned groove 42. When the proximal end 46 of the hook 44 is deformed, the distal end 48 moves in the first and a second directions 32, 34, respectively. Thus, when the splash guard 20 is introduced in the first portion 18 of the charging connection 16, the contact force built up between the first portion 18 of the charging connection 16 and the distal end 48 of the hook 44 forces the proximal end 46 to undergo elastic deformation in the first direction 32. As indicated in Fig. 4, preferably at least a portion of the distal end 48 is chamfered in order to simplify the initial elastically deformable of the proximal end 46 when the hook 44 enters the charging connection 16 via the lower opening 24. At a later stage of the mounting phase, when the distal end 48 is in line with the groove 42, the contact force significantly decreases - in some applications the contact force may even disappear- and the proximal end 46 rebounds the distal end 48 in the second direction 34. The distal end 48 will thus be lead into, and remain in, the groove 42, forming a connection between the splash guard 20 and the first portion 18 of the charging connection 16.

In the embodiment illustrated in Fig. 4, the elastically deformable hook 44 and the splash guard 20 are a unitary component. However, it is of course possible to manufacture the elastically deformable hook 44 separately of the splash guard 20. In some applications it may even be preferred to manufacture the elastically deformable hook 44 and the splash guard in separate materials and attach the hook 44 to the splash guard 20 by conventional attachment means, such as gluing or welding. It may also be possible to attach the elastically deformable hook 44 to the splash guard 20 by a second snap-on connection 50 (not shown).

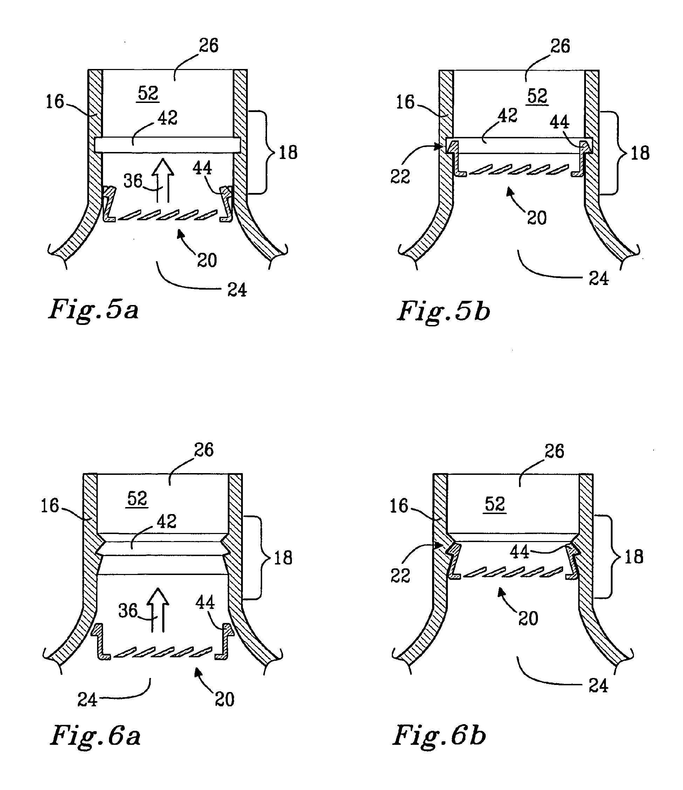

Figs. 5a, 5b, 6a and 6b, respectively, illustrates two implementations of the splash guard 20, with hooks 44, adapted to engage with a groove 42 of a first portion 18 of a charging connection 16. Figs. 5a and 5b illustrates an implementation of the splash guard 20, wherein the hooks 44 are elastically deformed during an introduction phase of the mounting of the splash guard 20. At a later stage, when the hooks 44 are level with the groove 42, the hooks 44 substantially assume the original shape, i.e. not deformed or biased.

However, Figs. 6a and 6b illustrates another embodiment of the invention, wherein the hooks 44 are elastically deformed when in the snap-on engagement with the first portion 18 of the charging connection 16. This embodiment is made possible, due to a constriction of the first portion 18 of the charging connection 16.

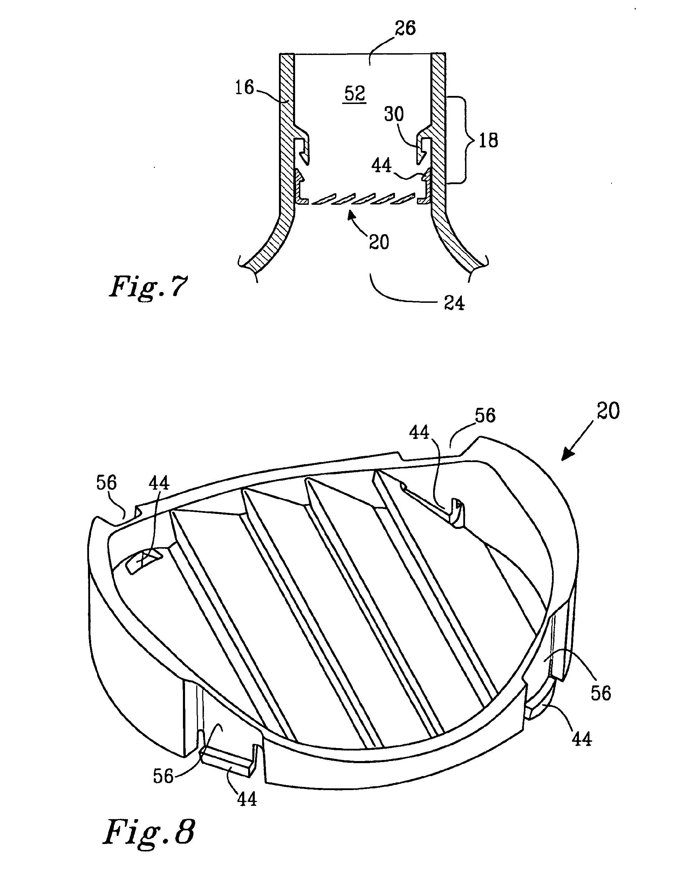

Furthermore, in one embodiment of the invention, as illustrated in Fig. 7, the hooks 44 are not susceptible to undergoing elastic deformation. Instead, second abutment members 30 of the first portion 18 of the charging connection 16 are adapted to undergo elastic deformation towards the center of the charging connection 16 during at least a part of the mounting of the splash guard 20.

In a preferred embodiment of the invention, the elastically deformable protrusion 42 comprises a plurality of elastically deformable hooks 44. For example, in the implementation of the splash guard illustrated in Fig. 8, the elastically deformable protrusion 42 of the splash guard 20 comprises four separate elastically deformable hooks 44.

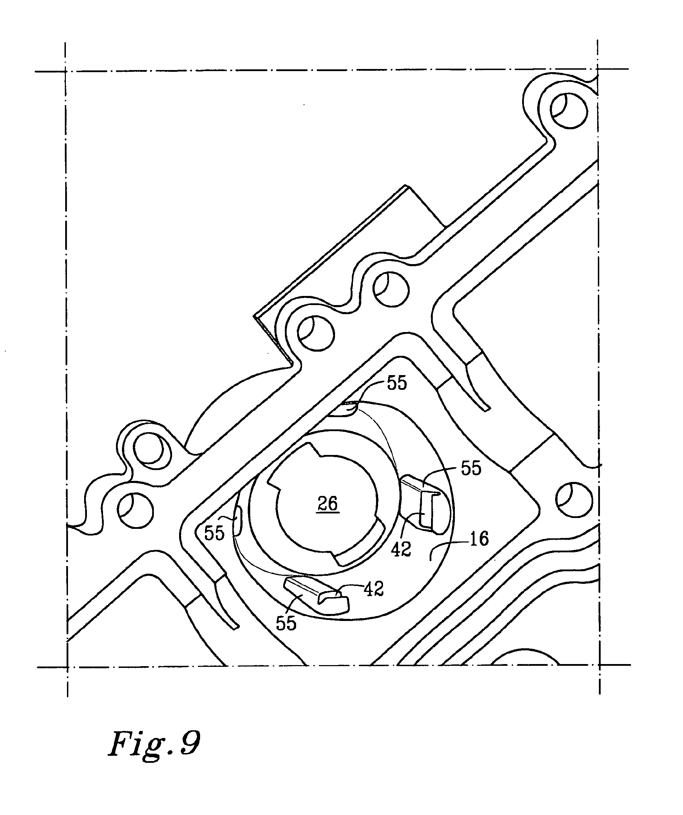

As may be gleaned from Figs. 5a and 6a for example, the groove 42 may extend circumferentially around an inner wall 52 of the first portion 18. However, in certain applications, it may suffice to provide the groove 42 at a few specific locations only. For example, as illustrated in Fig. 9, the charging connection 16 can be provided with a plurality of protrusions 55, each protrusion 55 being provided with a groove 42. A splash guard 20, which is intended to be used in conjunction with the protrusions 55 illustrated in Fig. 9, is illustrated in Fig. 8.

As may be gleaned from Fig. 8, the splash guard 20 is provided with four elastically deformable hooks 44, one for each protrusion 55 in the corresponding charging connection 16, illustrated in Fig. 9, each protrusion 55 being provided with a groove 42. Furthermore, each hook 44 is located in a notch 56 of the splash guard 20. Thus, when mounting the splash guard 20, it will be guided by the notches 56 and the protrusions 54 in the charging connection 16 until the each hook 44 engage with the corresponding groove 42, thus forming a snap-on connection.

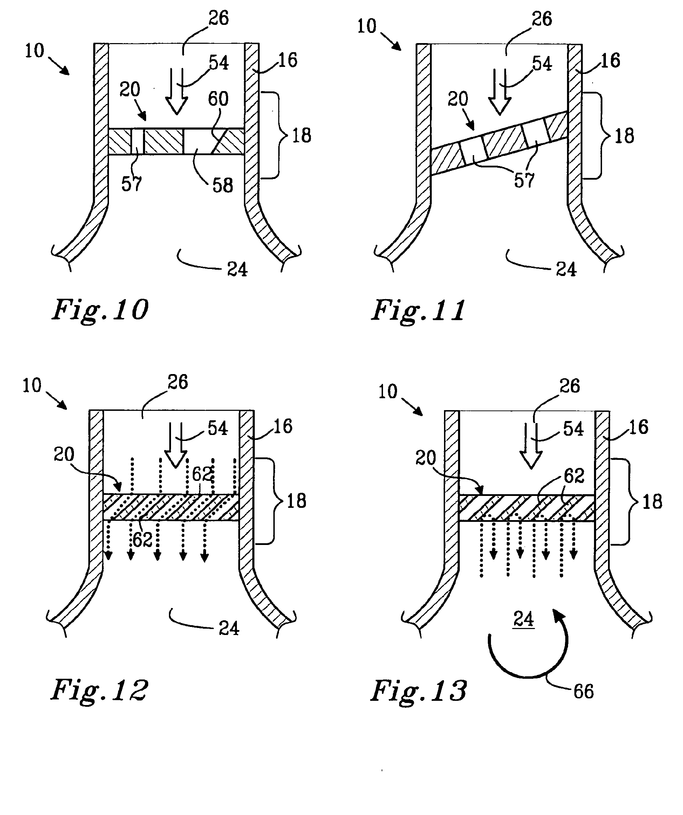

As previously discussed, the splash guard 20 can assume a plurality of shapes, as long as it prevents fluid from splashing out of the charging connection 16 while still allowing fluid to be filled through the same. As indicated in Fig. 10, the first portion 18 of the charging connection 16 extends in a first direction 54. This is generally applicable for the first portion 18 of the charging connection 16. In order to prevent fluid from splashing out of the charging connection 16, the splash guard 20 preferably comprises at least one opening 58 and the at least one opening 58 is delimited by an inclined surface 60 with respect to the first direction 54. Obtaining a splash guard 20 as defined above is possible in a plurality of different ways. For instance, as illustrated in Fig. 10, the splash guard 20 can comprise at least one funnel-shaped opening 58 which allows fluid to pass in the first direction 54, but makes splashing of fluid out of the charging connection 16 less likely to occur. Further illustrated in Fig. 10 is a second opening 57 delimited by a cylindrical surface substantially extending in the first direction 54. Thus, an implementation of the splash guard 20 can comprise a plurality of openings 57, 58 of different shapes, as long as at least one opening 58 is delimited by an inclined surface 60.

Furthermore, the splash guard 20 itself can be mounted in an inclined position with respect to the first direction 54, as illustrated in Fig. 11. Thus, the openings 57 of the implementation of the splash guard 20 illustrated in Fig. 11 are delimited by surfaces extending substantially perpendicular to the radial extension of the splash guard 20 itself. However, due to the inclined position of the splash guard 20, the splash preventing feature of the splash guard 20 is still obtained.

However, in a preferred embodiment of the invention, as illustrated in Fig. 12, the splash guard 20 comprises a plurality of mutually spaced apart ribs 62, and at least one of the ribs 62 is inclined with respect to the first direction 54. As further illustrated in Fig. 12, the mutually spaced apart ribs 62 are preferably orientated parallel to one another.

In order to reduce or prevent splashing, the mutually apart spaced ribs 62 are equally inclined with respect to the first direction 54. Fluid, which is being filled or splashes out of the reservoir is generally illustrated in Figs. 12 and 13 by dotted lines. As illustrated in Fig. 12, equally inclined ribs will allow fluid to pass through the splash guard 20 when the reservoir 12 is being filled. However, if fluid splashes up towards the opening of the charging connection 16, as illustrated in Fig. 13, the splash guard 20 will prevent fluid from splashing out of filler opening 26 of the charging connection 16.

The inclination of the ribs 62 with respect to the first direction 54 is preferably in a range of 10-80°, more preferably in a range of 30-60°, in order provide a sufficient splash protection while still providing a charging assembly 10, by which fluid is easily charged into the fluid reservoir 12. In the implementations of the splash guard 20 illustrated in Figs. 12 and 13, the inclination of the ribs 62 with respect to the first direction 54 is approximately 45°, which is a preferred inclination of the ribs.

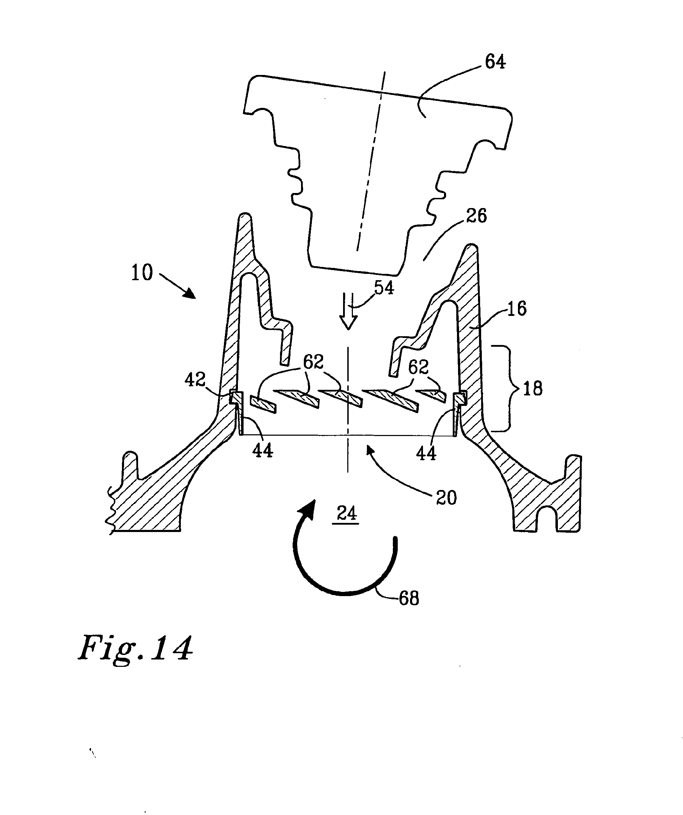

Furthermore, in some applications of the invention a reservoir 12, or any other member containing a fluid, may be connected to the fluid charging arrangement 10. The reservoir 12 may provided with a member adapted to rotate (not shown), such as a rotor, bladewheel, impeller or similar. In such a case, the splash guard 20 is preferably designed with concern taken to the intended direction of rotation of the rotational member. As such, if a rotational member is provided below the lower opening 24 of the embodiment of the invention as illustrated in Fig. 13, the intended direction of rotation of the rotational member is preferably counterclockwise, as indicated by arrow 66, since the inclination of the ribs as illustrated in Fig. 13 are susceptible to being more effective to prevent fluid droplets from splashing out of the charging connection 16 if the droplets progress towards the fluid filler opening 26 in a direction from right to left. However, the embodiment of the fluid charging arrangement 10 illustrated in Fig. 14 discloses a inclination of the ribs 62 which is preferred if a rotation member, adapted to rotate clockwise as indicated by arrow 68, is to be utilized beneath the lower opening 24.

As may be appreciated from Fig. 13, the risk of having fluid splashing out of the charging connection decreases as the total projected area of the ribs 62 in the first direction 54 increases. The greater the projected area, the greater the probability that fluid droplets, moving towards the fluid filler opening 26, will impact at least one of the ribs 62 and thus not progress further towards the fluid filler opening 26. Preferably, the ribs 62 collectively present a projected area in the first direction 54 which is greater than 50 %, preferably greater than 80 %, of the total area of the splash guard 20 in the first direction 54. In the implementation of the splash guard illustrated in Fig. 13, the ribs 62 collectively present a projected area in the first direction 54 which is almost 100 %, which is the most preferred implementation of a splash guard 20 comprising ribs 62.

Fig. 14 illustrates an embodiment of the fluid charging arrangement of the invention. The charging connection 16 is in this embodiment a part of a camshaft housing. As may be gleaned from Fig. 14, a splash guard 20 is inserted into a first portion 18 of the charging connection 16 and attached to the first portion 18 by a snap-on connection. According to the Fig. 14 embodiment, the snap-on connection comprises a plurality of elastically deformable hooks 44 and a groove 42 machined in the first portion 18 of the charging connection 16. The splash guard 20 comprises a plurality of mutually spaced apart ribs 62, equally inclined with respect to the first direction 54 of the first portion 18 of the charging connection 16. Further illustrated in Fig. 14 is a filler cap 64, which however is not a part of the invention.

Further modifications of the invention within the scope of the claims are feasible. For instance, the first portion 18 can be a constriction in the charging connection 16, so that the area of the splash guard 20 in the first direction 54 is substantially smaller than a general cross section area of the charging connection 16.

## Claims

1. A motor vehicle comprising a fluid charging arrangement (10) for a fluid reservoir (12) in said motor vehicle, said fluid charging arrangement (10) comprising a charging connection (16) having a first portion (18) and a splash guard (20) adapted to be located in said first portion (18) of said charging connection (16), **characterized in that that** said splash guard (20) provides a permanent passage for fluid replenishment and **in that** said splash guard (20) is adapted to be attached to said first portion (16) by a snap-on connection (22).

2. The motor vehicle according to claim 1, wherein the snap-on connection (22) comprises an first abutment member (28) on the splash guard (20) and a second abutment member (30) in the first portion (18) of the charging connection (16), wherein at least one of said abutment members (28, 30) is adapted to undergo elastic deformation during mounting of said splash guard (20).

3. The motor vehicle according to any one of the preceding claims, wherein the snap-on connection (22) comprises a elastically deformable protrusion (40) on the splash guard (20) and a groove (42) in the first portion (18) of the charging connection (16), wherein said protrusion (40) is adapted to engage with said groove (42).

4. The motor vehicle according to claim 3, wherein said elastically deformable protrusion (40) comprises a elastically deformable hook (44) attached to said splash guard (20), said hook (44) comprising a proximal end (46) adapted to undergo said elastic deformation and a distal end (48) adapted to engage with said groove (42).

5. The motor vehicle according to claim 4, wherein said elastically deformable hook (44) and said splash guard (20) are a unitary component.

6. The motor vehicle according to claim 4 or 5, wherein said elastically deformable protrusion (40) comprises a plurality of said hooks (44).

7. The motor vehicle according to any one of claims 3 to 6, wherein said groove (42) extends circumferentially around an inner wall of said first portion (18).

8. The motor vehicle according to any one of the preceding claims, wherein the splash guard (20) is made of a plastics material, for example a polyamide such as polyamide 66.

9. The motor vehicle according to any one of the preceding claims, wherein the splash guard (20) is die cast.

10. The motor vehicle according any one of the preceding claims, wherein said first portion (18) of the charging connection (16) extends in a first direction (54) and said splash guard (20) comprises at least one opening (58), wherein the at least one opening (58) is delimited by an inclined surface (60) with respect to said first direction (54).

11. The motor vehicle according to claim 10, wherein said splash guard (20) comprises a plurality of mutually spaced apart ribs (62), at least one of said ribs (62) being inclined with respect to said first direction (54).

12. The motor vehicle according to claim 11, wherein said mutually spaced apart ribs (62) are orientated parallel to one another.

13. The motor vehicle according to claim 12, wherein said mutually spaced ribs (62) are equally inclined with respect to said first direction (54).

14. The motor vehicle according to claim any of claims 10-13, wherein said inclination with respect to said first direction (54) is in a range of 10-80°, preferably 30-60°.

15. The motor vehicle according to claim any of claims 10-14, wherein the ribs (62) collectively present a projected area in the first direction (54) which is greater than 50 % of the total area of the splash guard (20) in the first direction (54), preferably greater than 80 %.

## Patentansprüche

1. Ein Kraftfahrzeug welches eine Flüssigkeitsladevorrichtung (10) für einen Flüssigkeitsbehälter (12) in dem Kraftfahrzeug umfasst, wobei die Flüssigkeitsladevorrichtung (10) eine Ladeverbindung (16) umfasst, die einen ersten Abschnitt (18) und einen Spritzschutz (20) aufweist, der dazu ausgelegt ist, in dem ersten Abschnitt (18) der Ladeverbindung (16) angeordnet zu sein, **dadurch gekennzeichnet, dass** der Spritzschutz (20) einen steten Durchlass für das Auffüllen der Flüssigkeit bietet und dass der Spritzschutz (20) dazu ausgelegt ist, durch eine Schnappverbindung (22) an dem ersten Abschnitt (18) befestigt zu werden

2. Kraftfahrzeug nach Anspruch 1, **dadurch gekennzeichnet, dass** die Schnappverbindung (22) ein erstes Anlageteil (28) an dem Spritzschutz (20) und ein zweites Anlageteil (30) an dem ersten Abschnitt (18) der Ladevebindung (16) umfasst, wobei mindestens eines der Anlageteile (28, 30) dazu ausgelegt ist, während der Montage des Spritzschutzes (20) eine elastische Verformung zu durchlaufen.

3. Kraftfahrzeug nach einem der vorhergehenden Ansprüche, **dadurch gekennzeichnet, dass** die Schnappverbindung (22) einen elastisch verformbaren Vorsprung (40) auf dem Spritzschutz (20) und eine Rille (42) in dem ersten Abschnitt (18) der Ladeverbindung (16) umfasst, wobei der Vorsprung (40) dazu ausgelegt ist, mit der Rille (42) in Eingriff zu stehen.

4. Kraftfahrzeug nach Anspruch 3, **dadurch gekennzeichnet, dass** der elastisch verformbare Vorsprung (40) einen an dem Spritzschutz (20) angebrachten, elastisch verformbaren Haken (44) umfasst, wobei der Haken (44) ein nahes Ende (46), das dazu ausgelegt ist, eine elastische Verformung zu durchlaufen und ein entferntes Ende (48), das dazu ausgelegt ist, mit der Rille(42) in Eingriff zu stehen, umfasst.

5. Kraftfahrzeug nach Anspruch 4, **dadurch gekennzeichnet, dass** der elastisch verformbare Haken (44) und der Spritzschutz (20) ein einstückiges Bauteil sind.

6. Kraftfahrzeug nach Anspruch 4 oder 5, **dadurch gekennzeichnet, dass** der elastisch verformbare Vorsprung (40) eine Mehrzahl der Haken (44) umfasst.

7. Kraftfahrzeug nach einem der Ansprüche 3 bis 6, **dadurch gekennzeichnet, dass** sich die Rille (42) in Umfangsrichtung um eine innere Wand des ersten Abschnittes (18) herum erstreckt.

8. Kraftfahrzeug nach einem der vorhergehenden Ansprüche, **dadurch gekennzeichnet, dass** der Spritzschutz (20) aus einem Kunststoffmaterial, zum Beispiel einem Polyamid, wie etwa Polyamid 66,besteht.

9. Kraftfahrzeug nach einem der vorhergehenden Ansprüche, **dadurch gekennzeichnet, dass** der Spritzschutz (20) im Druckguss gefertigt ist.

10. Kraftfahrzeug nach einem der vorhergehenden Ansprüche, **dadurch gekennzeichnet, dass** sich der erste Abschnitt (18) der Ladeverbindung (16) in eine erste Richtung (54) ausdehnt und der Spritzschutz (20) mindestens eine Öffnung (58) umfasst, wobei die mindestens eine Öffnung (58) durch eine geneigte Oberfläche (60) in Bezug auf die erste Richtung (54) begrenzt wird.

11. Kraftfahrzeug nach Anspruch 10, **dadurch gekennzeichnet, dass** der Spritzschutz (20) eine Mehrzahl an in gegenseitigem Abstand zueinander stehenden Rippen (62) umfasst, wobei mindestens eine dieser Rippen (62) in Bezug auf die erste Richtung (54) geneigt ist.

12. Kraftfahrzeug nach Anspruch 11, **dadurch gekennzeichnet, dass** die in gegenseitigem Abstand zueinander stehenden Rippen (62) parallel zueinander ausgerichtet sind.

13. Kraftfahrzeug nach Anspruch 12, **dadurch gekennzeichnet, dass** die in gegenseitigem Abstand zueinander stehenden Rippen (62) in Bezug auf die erste Richtung (54) gleich geneigt sind.

14. Kraftfahrzeug nach einem der Ansprüche 10 bis 13, **dadurch gekennzeichnet, dass** die Neigung in Bezug auf die erste Richtung (54) in einem Bereich von 10 bis 80 Grad, vorzugsweise 30 bis 60 Grad, liegt.

15. Kraftfahrzeug nach einem der Ansprüche 10 bis 14, **dadurch gekennzeichnet, dass** die Rippen (62) gemeinsam eine vorspringende Fläche in der ersten Richtung (54) darstellen, die größer als 50 % der gesamten Fläche des Spritzschutzes (20) in der ersten Richtung (54), vorzugsweise größer als 80 % ist

## Revendications

1. Véhicule à moteur comprenant un système (10) pour le chargement d'un fluide destiné à un réservoir (12) de liquide dans ledit véhicule à moteur, ledit système (10) pour le chargement d'un fluide comprenant un raccord (16) de chargement ayant une première portion (18) et un pare-éclaboussures (20) adapté pour être situé dans ladite première portion (18) dudit raccord (16) de chargement, ***caractérisé en ce que*** ledit pare-éclaboussures (20) offre un passage permanent pour le réapprovisionnement en fluide, et ***en ce que*** ledit pare-éclaboussures (20) est apte à être rendu solidaire de ladite première portion (16) par un raccord encliquetable (22).

2. Véhicule à moteur selon la revendication 1, dans lequel le raccord encliquetable (22) comprend un premier élément de butée (28) sur le pare-éclaboussures (20) et un deuxième élément de butée (30) dans la première portion (18) du raccord (16) de chargement, dans lequel au moins l'un desdits éléments de butée (28, 30) est apte à subir une déformation élastique pendant le montage dudit pare-éclaboussures (20).

3. Véhicule à moteur selon l'une quelconque des revendications précédentes, dans lequel le raccord encliquetable (22) comprend une saillie élastiquement déformable (40) sur le pare-éclaboussures (20) et une gorge (42) dans la première portion (18) du raccord (16) de chargement, dans lequel ladite saillie (40) est apte à s'engager avec ladite gorge (42).

4. Véhicule à moteur selon la revendication 3, dans lequel ladite saillie élastiquement déformable (40) comprend un crochet (44) élastiquement déformable fixé audit pare-éclaboussures (20), ledit crochet (44) comprenant une extrémité proximale (46) apte à subir ladite déformation élastique et une extrémité distale (48) apte à s'engager avec ladite gorge (42).

5. Véhicule à moteur selon la revendication 4, dans lequel ledit crochet élastiquement déformable (44) et ledit pare-éclaboussures (20) constituent un composant unitaire.

6. Véhicule à moteur selon la revendication 4 ou 5, dans lequel ladite saillie élastiquement déformable (40) comprend une pluralité desdits crochets (44).

7. Véhicule à moteur selon l'une quelconque des revendications 3 à 6, dans lequel ladite gorge (42) s'étend circonférentiellement autour d'une paroi intérieure de ladite première portion (18).

8. Véhicule à moteur selon l'une quelconque des revendications précédentes, dans lequel le pare-éclaboussures (20) est fait de manière plastique, par exemple d'un polyamide tel que le polyamide 66.

9. Véhicule à moteur selon l'une quelconque des revendications précédentes, dans lequel le pare-éclaboussures (20) est moulé en coquille.

10. Véhicule à moteur selon l'une quelconque des revendications précédentes, dans lequel ladite première portion (18) du raccord de chargement (16) s'étend dans une première direction (54) et ledit pare-éclaboussure (20) comprend au moins une ouverture (58), ladite au moins une ouverture (58) étant délimitée par une surface inclinée (60) par rapport à ladite première direction (54).

11. Véhicule à moteur selon la revendication 10, dans lequel ledit pare-éclaboussure (20) comprend une pluralité de nervures (62) espacées les unes des autres, au moins l'une desdites nervures (62) étant inclinée par rapport à ladite première direction (54).

12. Véhicule à moteur selon la revendication 11, dans lequel lesdites nervures (62) espacées les unes des autres sont orientées parallèlement les unes aux autres.

13. Véhicule à moteur selon la revendication 12, dans lequel lesdites nervures (62) espacées les unes des autres sont d'inclinaison égale par rapport à ladite première direction (54).

14. Véhicule à moteur selon l'une quelconque des revendications 10 à 13, dans lequel ladite inclinaison par rapport à ladite première direction (54) est comprise entre 10 et 80°, et de manière préférée entre 30 et 60°.

15. Véhicule à moteur selon l'une quelconque des revendications 10 à 14, dans lequel les nervures (62) présentent collectivement une surface projetée dans la première direction (54) qui est supérieure à 50 % de la surface totale du pare-éclaboussures (20) dans la première direction (54), et de manière préférée supérieure à 80 %.
